# FASCICULE DE BREVET EUROPEEN

(11) **EP 2 412 587 B1**
(45) Date de publication et mention de la délivrance du brevet: **03.04.2013**
(21) Numéro de dépôt: 10171320.4
(22) Date de dépôt: 29.07.2010
(51) Int. Cl.: B60R 25/02

(54) **Dispositif de verrouillage de colonne de direction de véhicule automobile**
Verriegelungsvorrichtung einer Lenksäule eines Kraftfahrzeugs
Device for locking an automobile steering column

(43) Date de publication de la demande: 01.02.2012
(73) Titulaire: Valeo Sicherheitssysteme, 85253 Erdweg (DE)
(72) Inventeur: Montay, Jean-Philippe, 94046, CRETEIL CEDEX (FR); Bollinger, Emmanuel, 94046, CRETEIL CEDEX (FR)
(74) Mandataire: Larger, Solène

(56) Documents cités:
- EP-A1- 0 989 038
- EP-A1- 1 688 327
- EP-A2- 1 182 104
- EP-A2- 2 025 567

## Description

L'invention concerne un dispositif de verrouillage de colonne de direction de véhicule automobile, logé dans un boîtier et comprenant un pêne de blocage mobile entre une position de verrouillage et une position déverrouillée.

Pour empêcher l'utilisation indue d'un véhicule, il est connu d'utiliser un dispositif de verrouillage de la colonne de direction, qui verrouille en rotation la colonne de direction.

Ces dispositifs de verrouillage de la colonne comprennent généralement un premier mécanisme, le mécanisme de verrouillage, tel qu'un pêne, qui coopère avec un évidement de forme correspondante de la colonne de direction.

Dans le cas d'un antivol électrique, ce premier mécanisme est disposé dans un boîtier se trouvant généralement au niveau des pédales du véhicule, aux pieds du conducteur. Bien que ce boîtier soit relativement peu accessible, il est possible pour un voleur d'intervenir au niveau de celui-ci, pour tenter de débloquer la colonne de direction, en endommageant ou en ouvrant ledit boîtier pour agir directement sur le mécanisme de verrouillage.

Pour prévenir ce type d'action, un second mécanisme, un mécanisme de blocage, est disposé dans le boîtier. Ce second mécanisme se déclenche en cas d'intervention directe sur le boîtier et est conçu pour nécessiter une intervention longue sur des éléments peu aisément accessibles de la colonne de direction afin de débloquer le mécanisme de verrouillage.

Ce second mécanisme comporte généralement un élément de blocage maintenu dans une position rétractée dans un logement avec un ressort compressé par un élément de fermeture. Lorsque le boîtier est ouvert ou déformé, l'élément de fermeture est retiré, l'élément de blocage est libéré. Le ressort se détend et propulse alors ledit élément de blocage vers une position de verrouillage, où il coopère avec un évidement de blocage du mécanisme de blocage, généralement situé au niveau du pêne. Le mécanisme de verrouillage est bloqué en position verrouillée.

Un tel dispositif de verrouillage de colonne de direction est décrit dans le document EP 1 182 104, où l'élément de blocage est une goupille ou bien une branche d'un ressort.

L'invention propose d'améliorer encore la sécurité fournie par les dispositifs de verrouillage de l'état de la technique.

Pour ce faire, l'invention propose un dispositif de verrouillage de colonne de direction de véhicule automobile comprenant :
- un mécanisme de verrouillage comprenant un pêne se déplaçant d'une position de déverrouillage vers une position de verrouillage, où il est en prise avec un évidement de verrouillage de la colonne de direction, et vice-versa,
- un boîtier, abritant au moins partiellement le mécanisme de blocage,
- un mécanisme de blocage, se déplaçant d'une position de déblocage vers une position de blocage, où il bloque le mécanisme de verrouillage en position de verrouillage, et se déclenchant lors d'une action visant à ouvrir ou détériorer le boîtier,
caractérisé en ce qu'il comprend en outre des moyens de détection d'une tentative de vol coopérant avec le mécanisme de blocage configurés pour déclencher des moyens de sécurisation du véhicule.

Le dispositif de verrouillage de colonne de direction peut en outre présenter une ou plusieurs des caractéristiques qui suivent, prises seules ou en combinaison.

Les moyens de détection d'une tentative de vol comportent un commutateur coopérant avec un élément du mécanisme de blocage de manière à être actionné lorsque ledit élément est mis en mouvement.

Les moyens d'une détection de tentative de vol comportent un détecteur magnétique coopérant avec un aimant disposé sur un élément du mécanisme de blocage, de manière à s'approcher du détecteur lorsque ledit élément est mis en mouvement.

Les moyens d'une détection de tentative de vol comportent un détecteur capacitif coopérant avec un élément du mécanisme de blocage de manière à être actionné lorsque ledit élément est actionné.

L'élément du mécanisme de verrouillage est un élément de blocage maintenu à l'état non bloquant dans le logement en prise avec un ressort comprimé, ledit ressort poussant en se détendant l'élément de blocage dans un évidement de fente correspondante du mécanisme de verrouillage lorsque le boîtier est ouvert ou déformé, afin de bloquer le mécanisme de verrouillage en position de verrouillage.

L'élément du mécanisme de verrouillage est un élément de fermeture maintenant à l'état non bloquant un élément de blocage dans un logement , et se déplaçant pour libérer ledit élément de blocage lorsque le boîtier est ouvert ou déformé, afin de bloquer le mécanisme de verrouillage en position de verrouillage.

L'invention a également pour objet un dispositif de sécurité de véhicule automobile qui comporte au moins un dispositif de verrouillage de colonne de direction selon l'une au moins des revendications précédentes relié à une unité de contrôle apte à contrôler au moins un moyen de sécurisation du véhicule.

Le dispositif peut en outre présenter l'une ou plusieurs des caractéristiques suivantes, prises seules ou en combinaison.

Le au moins un moyen de sécurisation du véhicule comporte des moyens d'inhibition du démarrage du véhicule lorsqu'une tentative de vol est détectée.

Le au moins un moyen de sécurisation du véhicule comporte des moyens d'activation des freins du véhicule lorsqu'une tentative de vol est détectée.

Le au moins un moyen de sécurisation du véhicule comporte des moyens d'émission vers un réseau de télécommunication d'un message d'alerte déclarant le véhicule comme étant volé lorsqu'une tentative de vol est détectée.

Le au moins un moyen de sécurisation du véhicule comporte des moyens de localisation et d'émission de coordonnées de la localisation du véhicule, déclenchés lorsqu'une tentative de vol est détectée.

D'autres caractéristiques et avantages de l'invention apparaîtront à la lecture de la description des figures suivantes, parmi lesquelles :
- la figure 1 est un schéma synoptique d'un véhicule comprenant un dispositif de verrouillage de colonne de direction selon l'invention,
- la figure 2 est une vue en coupe partielle d'un mode de réalisation d'un dispositif de verrouillage motorisé,
- les figures 3 et 4 sont des vues en coupe illustrant le mode de fonctionnement du mécanisme de blocage du dispositif de la figure 2,
- les figures 5 et 6 sont des schémas d'un mode de réalisation de détecteur de tentative de vol selon l'invention, en figure 5 lorsque le mécanisme de verrouillage est à l'état non verrouillant et en figure 6 lorsque le mécanisme de verrouillage est à l'état verrouillant.

Sur toutes les figures les mêmes références se rapportent aux mêmes éléments.

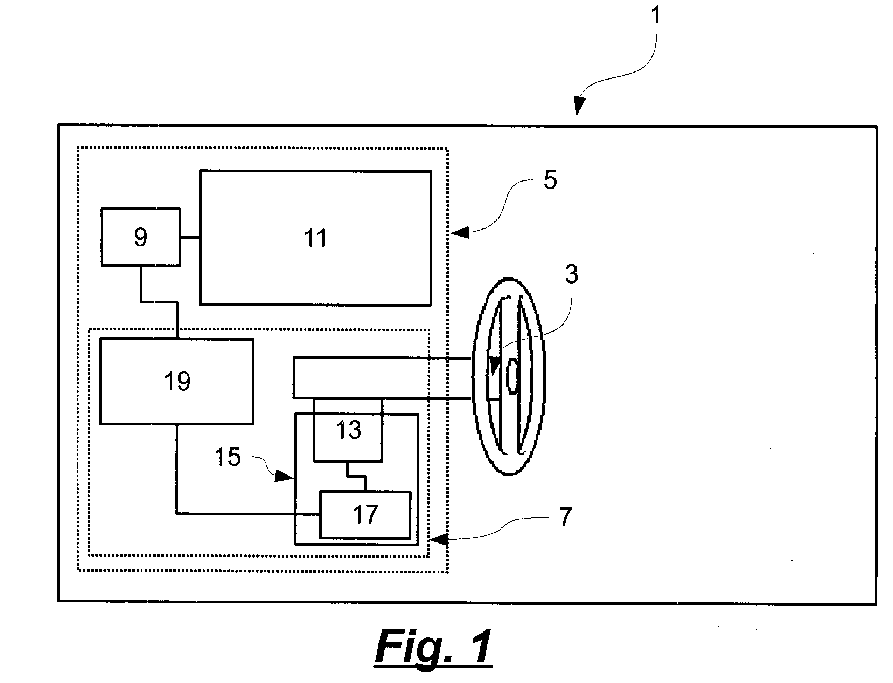

L'invention concerne un dispositif de verrouillage de colonne de direction. Un véhicule pourvu d'un dispositif selon l'invention est représenté de manière synoptique en figure 1.

Le véhicule 1, pourvu d'une colonne de direction 3, est muni d'un dispositif de sécurité 5, le dispositif de sécurité 5 comprenant un dispositif de verrouillage 7 de la colonne de direction 3, ainsi qu'une unité centrale 9 configurée pour contrôler des moyens de sécurisation 11 du véhicule 1. Ces moyens de sécurisation 11 peuvent notamment comprendre des moyens d'inhibition, au moins temporaire, du démarrage du véhicule 1, des moyens d'activation des freins du véhicule 1, des moyens d'émission vers un réseau de télécommunication d'un message d'alerte déclarant le véhicule 1 comme étant volé. Au message d'alerte peuvent aussi être associées des coordonnées du véhicules, établies grâce à des moyens de positionnement, tels qu'un GPS, afin de permettre de retrouver plus rapidement le véhicule 1.

Le dispositif de verrouillage 7 de la colonne de direction 3 comprend un mécanisme de verrouillage 13, pouvant basculer d'une position de déverrouillage, où la colonne de direction 3 est libre en rotation, à une position de verrouillage, où il verrouille la colonne de direction 3 en rotation. Ce mécanisme de verrouillage est au moins partiellement contenu dans un boîtier 15.

Le dispositif de verrouillage 7 comprend aussi un mécanisme de blocage 17, disposé dans le boîtier 15, pouvant basculer d'une position de déblocage vers une position de blocage, où il bloque le mécanisme de verrouillage 13 en position de verrouillage, et se déclenchant lors d'une action visant à ouvrir ou endommager le boîtier 15.

Le dispositif de verrouillage 7 comprend en outre des moyens de détection d'une tentative de vol 19. Ces moyens de détection 19 coopèrent avec le mécanisme de blocage 17, et sont destinés à être reliés à l'unité centrale 9 du véhicule 1, afin de contrôler le déclenchement des moyens de sécurisation 11 lorsque le mécanisme de blocage 17 bascule à l'état bloquant.

De la sorte, un voleur potentiel voulant déverrouiller la colonne de direction 3 en agissant directement sur le mécanisme de verrouillage 13 fait basculer le mécanisme de blocage 17 en position de blocage lorsqu'il ouvre ou détériore le boîtier 15. Le mécanisme de blocage 17 déclenche les moyens de détection 19. Les moyens de détection 19 déclenchent via l'unité centrale 9 les moyens de sécurisation 11 du véhicule 1, afin de rendre plus difficile la suite de la procédure de vol du véhicule 1.

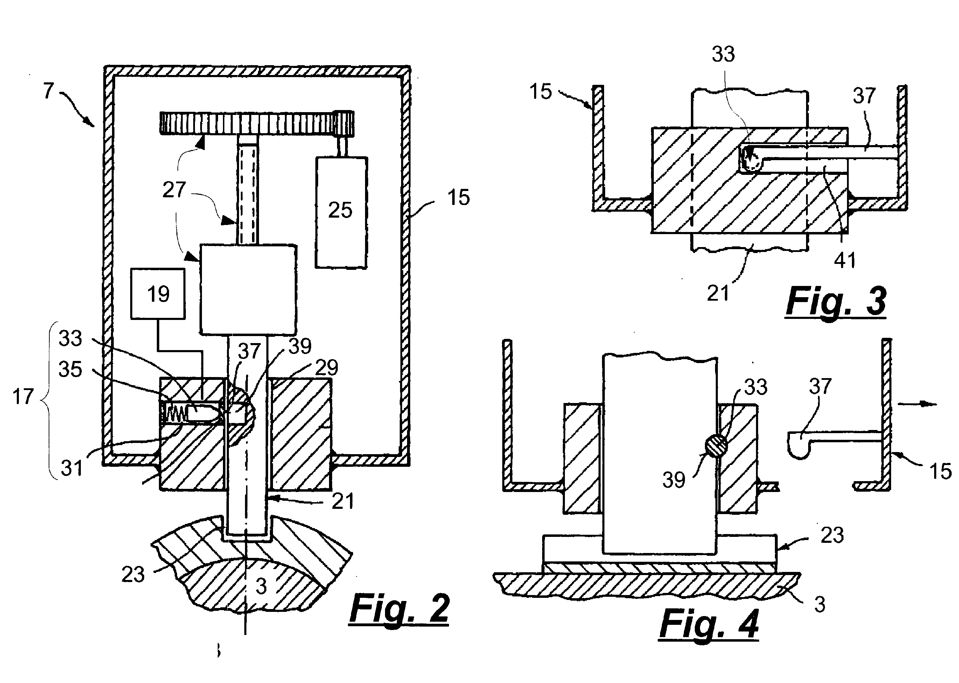

La figure 2 montre un exemple d'un mode de réalisation d'un dispositif de verrouillage 7 motorisé. Le dispositif de verrouillage 7 motorisé comprend un pêne 21, qui, en position de verrouillage est en prise avec un évidement de verrouillage 23, situé dans la colonne de direction 3, partiellement représentée. Le pêne 21 est mis en mouvement par un moteur 25 électrique, via une transmission 27.

Selon une alternative non représentée, il est possible de réaliser un dispositif de verrouillage 7 de façon mécanique, coopérant avec une clé, et basculant automatiquement en position de verrouillage en l'absence de clé conforme.

Le pêne 21 se déplace dans un premier logement 29, formant guide. Un second logement 31, perpendiculaire et concourant au premier logement 29 contient un élément de blocage 33, sous forme d'une goupille, ainsi qu'un ressort précontraint 35, et est maintenu fermé du côté du premier logement 29 par un élément de fermeture 37, amovible, qui se retire lors d'une action visant à ouvrir ou endommager le boîtier 15.

Un évidement de blocage 39 est disposé sur le pêne 21 de sorte à faire face au second logement 31 lorsque le pêne 21 se trouve en position de verrouillage. Ainsi, si le pêne 21 se trouve en position de verrouillage et que l'élément de fermeture 37 est retiré, le ressort 35 se détend et pousse la goupille 33 vers une position ou elle est en prise avec l'évidement de blocage 39, correspondant à la position de blocage.

Sur cette figure, les moyens de détection 19 sont représentés, de manière synoptique, en coopération avec la goupille 33, dont ils détectent le mouvement vers la position de blocage.

Les figures 3 et 4 illustrent le mode de fonctionnement du mécanisme de blocage 17 du dispositif de verrouillage 7 de la figure 2.

Sur la figure 3, où le mécanisme de blocage 17 est en position de déblocage, on peut voir qu'une partie de l'élément de fermeture 37 est insérée dans un troisième logement 41, perpendiculaire et concourant au second logement 31. Une extrémité de l'élément de fermeture 37 est reliée à la paroi du boîtier 15, destinée à se mouvoir lorsque le boîtier 15 5 est déformé ou endommagé. La paroi du boîtier 15 peut aussi comprendre des lignes de prédécoupage, volontairement plus fines ou affaiblies, afin d'assurer que la portion de paroi portant l'élément de fermeture 37 se détache et soit mise en mouvement lorsqu'une contrainte importante est appliquée au boîtier 15.

La goupille 33 est située derrière l'élément de fermeture, le pêne 21, partiellement représenté en transparence, se trouve à l'avant.

Sur la figure 4, le boîtier a été endommagé. La portion de paroi portant l'élément de fermeture 37 a été déplacée, et ledit élément de fermeture 37 est sorti du troisième logement 41. La goupille 33 a été poussée dans une position où elle est en prise avec le second logement 31 et l'évidement de blocage 39. Le pêne 21 est alors bloqué en position de verrouillage.

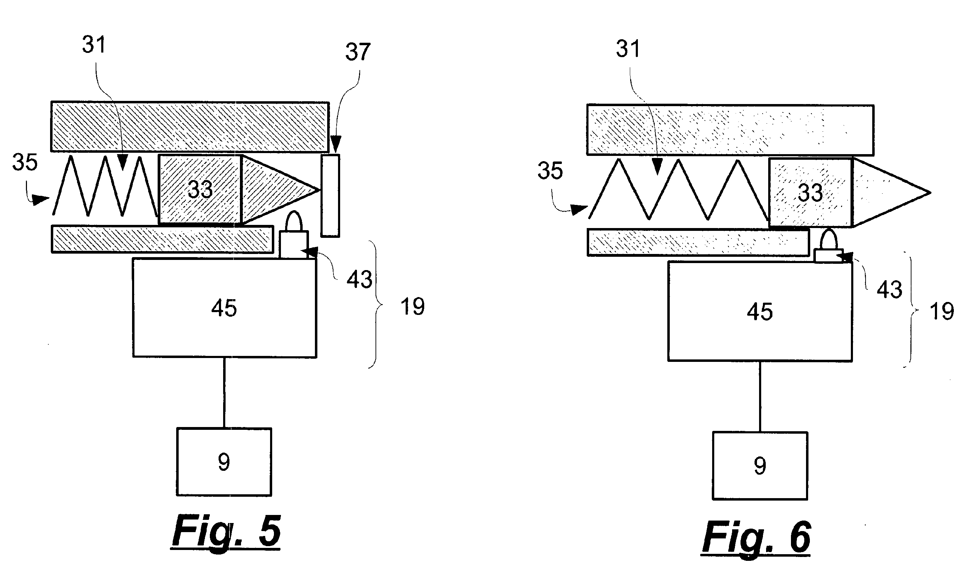

Les figures 5 et 6 montrent plus en détail un mode de réalisation des moyens de détection 19. Sur la figure 5, le mécanisme de blocage 13 est en position de déblocage, la goupille 33 est maintenue dans le second logement 31 par l'élément de fermeture 37. Un pion 43, relié à un interrupteur 45, est placé sur la course de la goupille 33.

Sur la figure 6, le mécanisme de blocage 13 a basculé en position de blocage. La goupille 33, poussée par le ressort 35 déplace le pion 43 par coopération de forme, ce qui actionne l'interrupteur 45. L'interrupteur 45 est relié à l'unité centrale 9, qui contrôle les moyens de sécurisation 11 du véhicule 1.

Un mode de réalisation alternatif des moyens de détection 19 peut comporter un aimant disposé au niveau de la goupille 33, et une ampoule Reed disposée le long de la course de la goupille 33, de sorte que l'aimant est approché de l'ampoule lorsque le mécanisme de blocage 13 bascule en position de blocage. D'autres modes de réalisation alternatifs comprenant un détecteur capacitif ou piézoélectrique sont également possibles.

Il est aussi possible de réaliser des moyens de détection 19 coopérants avec l'élément de fermeture 37 plutôt qu'avec la goupille 33.

Un dispositif de sécurité 5 de véhicule 1 comprenant un dispositif de verrouillage 7 de la colonne de direction 3 permet de rendre encore plus difficile le vol du véhicule 1. En effet, l'intervention au niveau du mécanisme de verrouillage 13 déclenchant des réponses de la part de moyens de sécurisation 11 du véhicule 1, le déverrouillage de la colonne de direction 3 devient moins aisé, et donc le véhicule 1 ne pourra pas être conduit sans que le pêne 21 ait été rompu, ce qui rend le véhicule 1 identifiable comme étant volé.

## Revendications

1. Dispositif de verrouillage (7) de colonne de direction (3) de véhicule automobile (1) comprenant :
- un mécanisme de verrouillage (13) comprenant un pêne (21) se déplaçant d'une position de déverrouillage vers une position de verrouillage, où il est en prise avec un évidement de verrouillage (23) de la colonne de direction (3), et vice-versa,
- un boîtier (15), abritant au moins partiellement le mécanisme de verrouillage (13),
- un mécanisme de blocage (17), se déplaçant d'une position de déblocage vers une position de blocage, où il bloque le mécanisme de verrouillage (13) en position de verrouillage, et se déclenchant lors d'une action visant à ouvrir ou détériorer le boîtier (15), **caractérisé en ce qu'**il comprend en outre des moyens de détection (19) d'une tentative de vol coopérant avec le mécanisme de blocage (17) configurés pour déclencher des moyens de sécurisation (11) du véhicule (1).

2. Dispositif selon la revendication 1, **caractérisé en ce que** les moyens de détection (19) d'une tentative de vol comportent un commutateur (45) coopérant avec un élément (33, 37) du mécanisme de blocage (17) de manière à être actionné lorsque ledit élément (33, 37) est mis en mouvement.

3. Dispositif selon la revendication 1 ou 2, **caractérisé en ce que** les moyens de détection (19) d'une tentative de vol comportent un détecteur magnétique coopérant avec un aimant disposé sur un élément (33, 37) du mécanisme de blocage (17), de manière à s'approcher du détecteur lorsque ledit élément est mis en mouvement.

4. Dispositif selon la revendication 1, 2 ou 3, **caractérisé en ce que** les moyens de détection (19) d'une tentative de vol comportent un détecteur capacitif coopérant avec un élément (33, 37) du mécanisme de blocage (19) de manière à être actionné lorsque ledit élément (33, 37) est actionné.

5. Dispositif selon l'une des revendications 2 à 4, **caractérisé en ce que** l'élément (33, 37) du mécanisme de verrouillage (17) est un élément de blocage (33) maintenu à l'état non bloquant dans un logement (31) en prise avec un ressort comprimé (35), ledit ressort comprimé (35) poussant en se détendant l'élément de blocage (33) dans un évidement (39) de forme correspondante du mécanisme de verrouillage (13) lorsque le boîtier (15) est ouvert ou déformé, afin de bloquer le mécanisme de verrouillage (13) en position de verrouillage.

6. Dispositif selon l'une des revendications 2 à 4, **caractérisé en ce que** l'élément (33, 37) du mécanisme de verrouillage (13) est un élément de fermeture (37) maintenant à l'état non bloquant un élément de blocage (33) dans un logement (31), et se déplaçant pour libérer ledit élément de blocage (33) lorsque le boîtier (15) est ouvert ou déformé, afin de bloquer le mécanisme de verrouillage (13) en position de verrouillage.

7. Dispositif de sécurité (5) de véhicule automobile (1) **caractérisé en ce qu'**il comporte au moins un dispositif de verrouillage (7) de colonne de direction (13) selon l'une au moins des revendications précédentes et au moins un moyen de sécurisation (11) du véhicule (1).

8. Dispositif selon la revendication 7, **caractérisé en ce que** le au moins un moyen de sécurisation (11) du véhicule (1) comporte des moyens d'inhibition du démarrage du véhicule lorsqu'une tentative de vol est détectée.

9. Dispositif selon la revendication 7 ou 8, **caractérisé en ce que** le au moins un moyen de sécurisation (11) du véhicule (1) comporte des moyens d'activation des freins du véhicule (1) lorsqu'une tentative de vol est détectée.

10. Dispositif selon l'une des revendications 7 à 9, **caractérisé en ce que** le au moins un moyen de sécurisation (11) du véhicule (1) comporte des moyens d'émission vers un réseau de télécommunication d'un message d'alerte déclarant le véhicule (1) comme étant volé lorsqu'une tentative de vol est détectée.

11. Dispositif selon l'une des revendications 7 à 10, **caractérisé en ce que** le au moins un moyen de sécurisation (11) du véhicule (1) comporte des moyens de localisation et d'émission de coordonnées de la localisation du véhicule (1), déclenchés lorsqu'une tentative de vol est détectée.

## Claims

1. Locking device (7) for a steering column (3) of a motor vehicle (1), comprising:
- a locking mechanism (13) comprising a bolt (21) moving from an unlocked position to a locked position, where it is engaged with a locking recess (23) for locking the steering column (3), and vice versa,
- a housing (15) at least partially accommodating the locking mechanism (13),
- an immobilizing mechanism (17) moving from a released position to an immobilized position, where it immobilizes the locking mechanism (13) in the locked position, and being triggered at the time of an action designed to open or damage the housing (15),
**characterized in that** it also comprises means (19) for detecting a theft attempt interacting with the immobilizing mechanism (17), the said means being configured to trigger securing means (11) of the vehicle (1).

2. Device according to Claim 1, **characterized in that** the means (19) for detecting an attempted theft comprise a switch (45) interacting with an element (33, 37) of the immobilizing mechanism (17) so as to be actuated when the said element (33, 37) is set in motion.

3. Device according to Claim 1 or 2, **characterized in that** the means (19) for detecting an attempted theft comprise a magnetic detector interacting with a magnet placed on an element (33, 37) of the immobilizing mechanism (17) so as to move towards the detector when the said element is set in motion.

4. Device according to Claim 1, 2 or 3, **characterized in that** the means (19) for detecting an attempted theft comprise a capacitive detector interacting with an element (33, 37) of the immobilizing mechanism (19) so as to be actuated when the said element (33, 37) is actuated.

5. Device according to one of Claims 2 to 4, **characterized in that** the element (33, 37) of the locking mechanism (13) is an immobilizing element (33) held in the non-immobilizing state in a housing (31) engaged with a compressed spring (35), the said compressed spring (35) pushing, by expanding, the immobilizing element (33) into a recess (39) of matching shape of the locking mechanism (13) when the housing (15) is opened or deformed, in order to immobilize the locking mechanism (13) in the locked position.

6. Device according to one of Claims 2 to 4, **characterized in that** the element (33, 37) of the locking mechanism (13) is a closure element (37) holding in the non-immobilizing state an immobilizing element (33) in a housing (31), and moving to release the said immobilizing element (33) when the housing (15) is opened or deformed, in order to immobilize the locking mechanism (13) in the locked position.

7. Security device (5) for a motor vehicle (1), **characterized in that** it comprises at least one locking device (7) for locking the steering column (13) according to at least one of the preceding claims and at least one means (11) for securing the vehicle (1).

8. Device according to Claim 7, **characterized in that** the at least one securing means (11) for securing the vehicle (1) comprises means for inhibiting the starting of the vehicle when a theft attempt is detected.

9. Device according to Claim 7 or 8, **characterized in that** the at least one securing means (11) for securing the vehicle (1) comprises means for activating the brakes of the vehicle (1) when a theft attempt is detected.

10. Device according to one of Claims 7 to 9, **characterized in that** the at least one securing means (11) for securing the vehicle (1) comprises a means for transmitting to a telecommunication network an alarm message declaring that the vehicle (1) is being stolen when a theft attempt is detected.

11. Device according to one of Claims 7 to 10, **characterized in that** the at least one securing means (11) for securing the vehicle (1) comprises means for locating and transmitting coordinates for locating the vehicle (1), which means are triggered when a theft attempt is detected.

## Patentansprüche

1. Verriegelungsvorrichtung (7) einer Lenksäule (3) eines Kraftfahrzeugs (1), die enthält:
- einen Verriegelungsmechanismus (13), der einen Riegel (21) enthält, welcher sich von einer Entriegelungsstellung in eine Verriegelungsstellung, in der er mit einer Verriegelungsaussparung (23) der Lenksäule (3) in Eingriff ist, und umgekehrt verschiebt,
- ein Gehäuse (15), in dem der Verriegelungsmechanismus (13) zumindest zum Teil untergebracht ist,
- einen Blockiermechanismus (17), der sich von einer Freigabestellung in eine Blockierstellung verschiebt, in der er den Verriegelungsmechanismus (13) in der Verriegelungsstellung blockiert, und bei einer Betätigung mit dem Ziel des Öffnens oder Zerstörens des Gehäuses (15) ausgelöst wird, **dadurch gekennzeichnet, dass** sie außerdem Erfassungseinrichtungen (19) eines Diebstahlversuchs enthält, die mit dem Blockiermechanismus (17) zusammenwirken und konfiguriert sind, um Sicherheitseinrichtungen (11) des Fahrzeugs (1) auszulösen.

2. Vorrichtung nach Anspruch 1, **dadurch gekennzeichnet, dass** die Erfassungseinrichtungen (19) eines Diebstahlversuchs einen Schalter (45) aufweisen, der mit einem Element (33, 37) des Blockiermechanismus (17) so zusammenwirkt, dass er betätigt wird, wenn das Element (33, 37) in Bewegung versetzt wird.

3. Vorrichtung nach Anspruch 1 oder 2, **dadurch gekennzeichnet, dass** die Erfassungseinrichtungen (19) eines Diebstahlversuchs einen magnetischen Detektor enthalten, der mit einem Magnet zusammenwirkt, welcher auf einem Element (33, 37) des Blockiermechanismus (17) angeordnet ist, um sich dem Detektor anzunähern, wenn das Element in Bewegung versetzt wird.

4. Vorrichtung nach Anspruch 1, 2 oder 3, **dadurch gekennzeichnet, dass** die Erfassungseinrichtungen (19) eines Diebstahlversuchs einen kapazitiven Detektor aufweisen, der mit einem Element (33, 37) des Blockiermechanismus (19) zusammenwirkt, um betätigt zu werden, wenn das Element (33, 37) betätigt wird.

5. Vorrichtung nach einem der Ansprüche 2 bis 4, **dadurch gekennzeichnet, dass** das Element (33, 37) des Verriegelungsmechanismus (13) ein Blockierelement (33) ist, das im nicht-blockierenden Zustand in einer Aufnahme (31) in Eingriff mit einer komprimierten Feder (35) gehalten wird, wobei die komprimierte Feder (35), indem sie sich entspannt, das Blockierelement (33) in eine Aussparung (39) entsprechender Form des Verriegelungsmechanismus (13) drückt, wenn das Gehäuse (15) geöffnet oder verformt wird, um den Verriegelungsmechanismus (13) in der Verriegelungsstellung zu blockieren.

6. Vorrichtung nach einem der Ansprüche 2 bis 4, **dadurch gekennzeichnet, dass** das Element (33, 37) des Verriegelungsmechanismus (13) ein Schließelement (37) ist, das ein Blockierelement (33) im nicht-blockierenden Zustand in einer Aufnahme (31) hält, und sich verschiebt, um das Blockierelement (33) freizugeben, wenn das Gehäuse (15) geöffnet oder verformt wird, um den Verriegelungsmechanismus (13) in der Verriegelungsstellung zu blockieren.

7. Sicherheitsvorrichtung (5) eines Kraftfahrzeugs (1), **dadurch gekennzeichnet, dass** sie mindestens eine Verriegelungsvorrichtung (7) der Lenksäule (13) nach mindestens einem der vorhergehenden Ansprüche und mindestens eine Sicherheitseinrichtung (11) des Fahrzeugs (1) aufweist.

8. Vorrichtung nach Anspruch 7, **dadurch gekennzeichnet, dass** die mindestens eine Sicherheitseinrichtung (11) des Fahrzeugs (1) Einrichtungen zum Verhindern des Starts des Fahrzeugs aufweist, wenn ein Diebstahlversuch erfasst wird.

9. Vorrichtung nach Anspruch 7 oder 8, **dadurch gekennzeichnet, dass** die mindestens eine Sicherheitseinrichtung (11) des Fahrzeugs (1) Einrichtungen zur Betätigung der Bremsen des Fahrzeugs (1) aufweist, wenn ein Diebstahlversuch erfasst wird.

10. Vorrichtung nach einem der Ansprüche 7 bis 9, **dadurch gekennzeichnet, dass** die mindestens eine Sicherheitseinrichtung (11) des Fahrzeugs (1) Einrichtungen zum Senden einer Alarmmitteilung an ein Telekommunikationsnetz aufweist, die das Fahrzeug (1) als gestohlen meldet, wenn ein Diebstahlversuch erfasst wird.

11. Vorrichtung nach einem der Ansprüche 7 bis 10, **dadurch gekennzeichnet, dass** die mindestens eine Sicherheitseinrichtung (11) des Fahrzeugs (1) Einrichtungen zur Ortsbestimmung und zur Sendung von Koordinaten der Ortsbestimmung des Fahrzeugs (1) aufweist, die ausgelöst werden, wenn ein Diebstahlversuch erfasst wird.
